(19)

**Europäisches Patentamt**

**European Patent Office**

**Office européen des brevets**

(11) **EP 4 621 671 A1**

(12) **EUROPEAN PATENT APPLICATION**
published in accordance with Art. 153(4) EPC

(43) Date of publication:
**24.09.2025 Bulletin 2025/39**

(21) Application number: **23891630.8**

(22) Date of filing: **15.11.2023**

(51) International Patent Classification (IPC):
**G06Q 10/04** (2023.01)  **G06Q 10/20** (2023.01)

(52) Cooperative Patent Classification (CPC):
**G06Q 10/04; G06Q 10/20**

(86) International application number:
**PCT/JP2023/041160**

(87) International publication number:
**WO 2024/106483 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2022 JP 2022184912**

(71) Applicant: **Hitachi Construction Machinery Co., Ltd.**
**Tokyo 110-0015 (JP)**

(72) Inventors:
• **MATSUDA, Takuya**
  **Tokyo 110-0015 (JP)**
• **OONO, Kazuhiro**
  **Tokyo 140-0002 (JP)**
• **YADA, Tomoki**
  **Tokyo 140-0002 (JP)**
• **NAKAJIMA, Ryo**
  **Tokyo 140-0002 (JP)**

(74) Representative: **MERH-IP Matias Erny Reichl Hoffmann**
**Patentanwälte PartG mbB**
**Paul-Heyse-Straße 29**
**80336 München (DE)**

(54) **LIFETIME PREDICTION SYSTEM**

(57)    An objective is to provide a lifetime prediction system that allows a highly reliable lifetime prediction even when record of events having occurred in products are inaccurate. A lifetime prediction system 1 includes a server device 5 that predicts a lifetime of a product as a machine such as a work machine 2 or a machine part. The server device 5 includes an operation information database 52 that stores operation information for each of a plurality of products, a history information database 53 that stores history information indicating a history of event data as a record of an event having occurred in each of the plurality of products and an arithmetic processing device 54 that predicts the lifetime of the product. The arithmetic processing device 54 calculates an event data acquisition rate indicating a rate of product having the event data in which occurrence of the event is accurately recorded to the plurality of products, based on the operation information and history information, and predicts a corrected lifetime of the product based on the calculated event data acquisition rate.

Fig. 1

## Description

Technical Field

The present invention relates to a lifetime prediction system that predicts a lifetime of a product.

Background Art

A survival time analysis (survival analysis) method that calculates survival rate curves of products is known as a method that predicts lifetimes of the products including a machine or a machine part, such as a work machine (for example, Patent Literature 1).

Patent Literature 1 discloses the use of Kaplan-Meier method, which is one of the methods of the survival time analysis, in order to evaluate the machine lifetimes of plant machines.

Citation List

Patent Literature

Patent Literature 1: JP 6944586 B

Summary of Invention

Technical Problem

The Kaplan-Meier method is an effective technique for predicting a lifetime of a product based on occurrence of an "event" such as a repair of a product (including an exchange of a part). However, the Kaplan-Meier method is a technique that assumes that the events that occur in the product are accurately recorded.

For example, when the plant machine is an observation target as in Patent Literature 1, regular inspections are performed by managers and suppliers with specialist knowledge. Thus, any event occurring in the plant machine (repairs or abnormalities in the plant machines) are accurately recorded.

On the other hand, in the case of the work machines, a user may personally carry out a repair oneself or exchange with an part other than a genuine part (hereafter also referred to as "imitation"). Since a history of the exchange is not accurately detected for the imitation, when the work machine is the observation target, it is possible that the event that occurs is not accurately recorded. As a result, when using the Kaplan-Meier method to predict the lifetime of a product such as a work machine, there is a possibility that an event such as a repair involving a part replacement is treated as if it had not occurred (no repair had occurred), even though it did occur, and that an excessively long lifetime prediction result could be acquired.

In consideration of the above-described circumstance, it is an objective of the present invention to provide a lifetime prediction system that allows a highly reliable lifetime prediction even when record of events having occurred in products are inaccurate.

Solution to Problem

To solve the above-described problem, a lifetime prediction system of the present invention is a lifetime prediction system that includes a server device that predicts a lifetime of a product as a machine or a machine part. The server device includes an operation information database that stores operation information for each of a plurality of products, a history information database that stores history information indicating a history of event data as a record of an event having occurred in each of the plurality of products, and an arithmetic processing device that predicts the lifetime. The arithmetic processing device calculates an event data acquisition rate indicating a rate of product having the event data in which occurrence of the event is accurately recorded to the plurality of products, based on the stored operation information and history information, and predicts a corrected lifetime based on the calculated event data acquisition rate.

Advantageous Effects of Invention

The present invention can provide a lifetime prediction system that allows a highly reliable lifetime prediction even when record of events having occurred in products are inaccurate.

Brief Description of Drawings

Fig. 1 is a diagram illustrating a configuration of a lifetime prediction system of the embodiment.

Fig. 2 is a diagram describing information stored in an operation information database illustrated in Fig. 1.

Fig. 3 is a diagram describing information stored in a history information database illustrated in Fig. 1.

Fig. 4 is a diagram describing a lifetime prediction result.

Fig. 5 is a flowchart of a processing related to a lifetime prediction executed by an arithmetic processing device illustrated in Fig. 1.

Fig. 6 is a flowchart of a detail of Step s2 illustrated in Fig. 5.

Fig. 7 is a flowchart of a detail of Step s3 illustrated in Fig. 5.

Fig. 8 is a diagram illustrating another display example of the lifetime prediction result.

Fig. 9 is a diagram illustrating another display example of the lifetime prediction result.

Fig. 10 is a diagram illustrating another display example of the lifetime prediction result.

Description of Embodiments

The following describes embodiments of the present invention using drawings. Unless otherwise specified, configurations with the same symbol in each embodiment have the same function in each embodiment, and their descriptions are omitted.

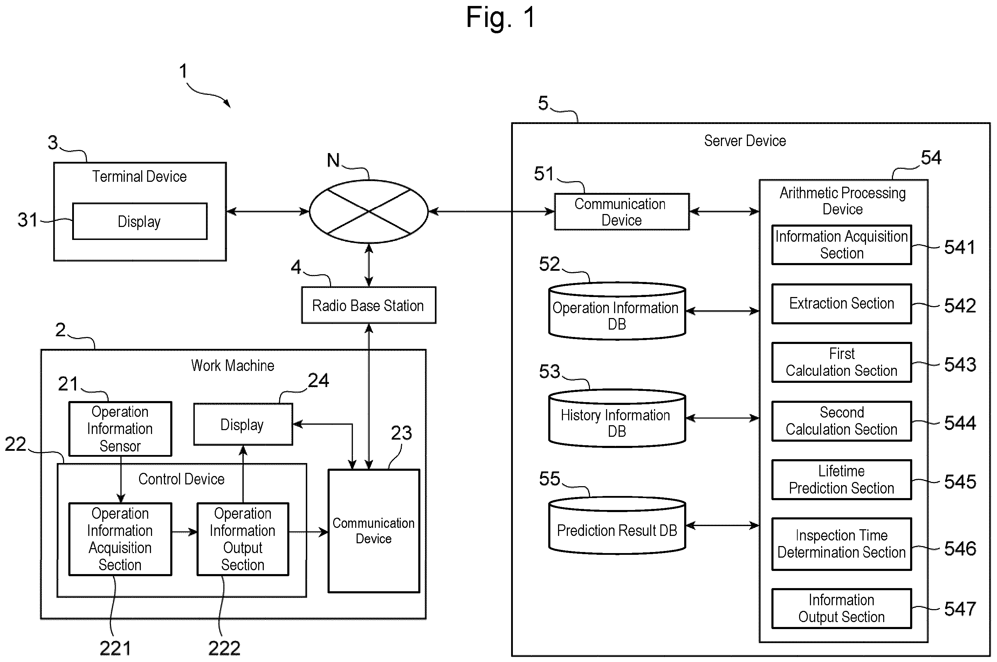

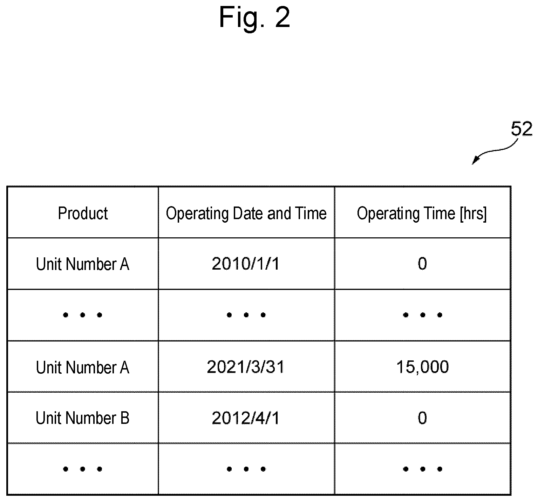

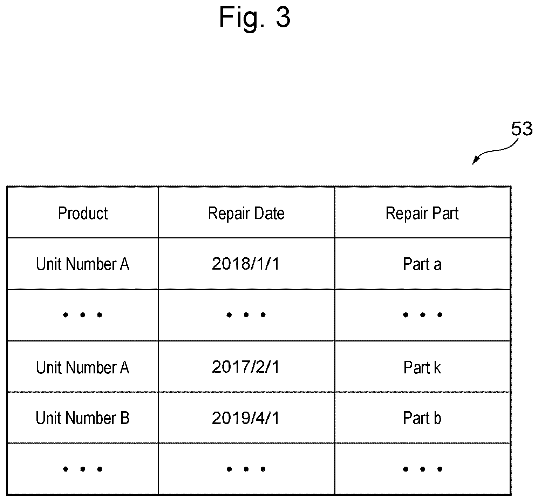

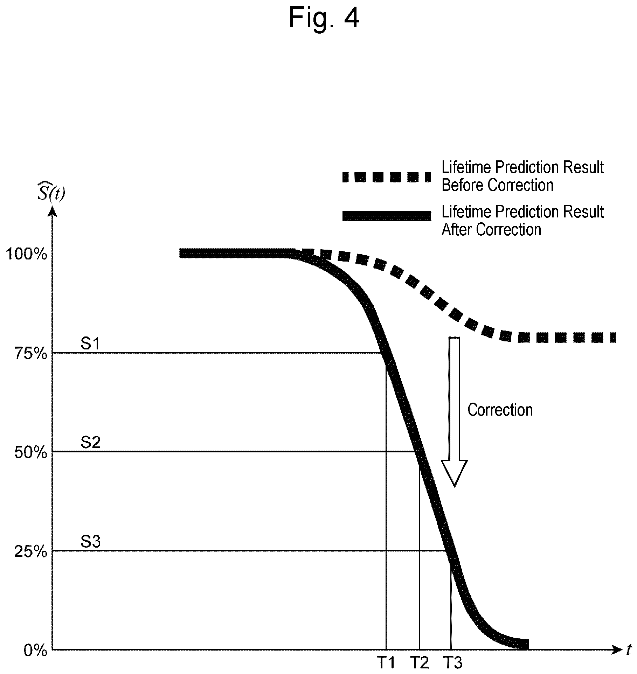

Fig. 1 is a diagram illustrating a configuration of a lifetime prediction system 1 of an embodiment. Fig. 2 is a diagram describing information stored in an operation information database 52 illustrated in Fig. 1. Fig. 3 is a diagram describing information stored in a history information database 53 illustrated in Fig. 1. Fig. 4 is a diagram describing a lifetime prediction result.

The lifetime prediction system 1 is a lifetime prediction system that predicts a lifetime of a product as a machine or a machine part. The product as an observation target of the lifetime prediction system 1 may be a product such as a work machine 2 for which there is a possibility that an accurate record of an event that has occurred is not created. Alternatively, the product as the observation target of the lifetime prediction system 1 may be a product for which an accurate record of an event that has occurred is created. In the embodiment, the description assumes that the product as the observation target of the lifetime prediction system 1 is the work machine 2.

The lifetime prediction system 1 includes the work machine 2, a terminal device 3, a radio base station 4, and a server device 5. The work machine 2, the terminal device 3, and the server device 5 are connected to allow communication therebetween via a communication network N.

The work machine 2 includes an operation information sensor 21, a control device 22, a communication device 23, and a display 24. The operation information sensor 21 is attached to the work machine 2 and collects operation information, which includes an operation time, a travel distance, a hydraulic actuator pressure, and the like. The control device 22 includes an operation information acquisition section 221 that acquires the operation information from the operation information sensor 21, and an operation information output section 222 that outputs the acquired operation information to the communication device 23 or the display 24. The communication device 23 communicates with the server device 5 via the radio base station 4 that constitutes the communication network N. The communication device 23 transmits the acquired operation information of the work machine 2 to at least the server device 5 via the communication network N. The display 24 can display the operation information output from the control device 22 or the lifetime prediction result and the like transmitted from the server device 5.

The terminal device 3 is a portable terminal device such as a smartphone that has a wireless communication function, a camera function, an input function, a display function, and the like. The terminal device 3 may be a terminal device carried by a maintenance personnel of the work machine 2. The terminal device 3 includes a display 31 configured with a touch screen and the like having an input function and a display function. The display 31 displays inspection items for the work machine 2, accepts an input of an inspection result by the maintenance personnel, and stores them in a predetermined memory region of the terminal device 3. The inspection result includes a repair record, which is a record of a repair (including a part replacement) performed on the work machine 2. The terminal device 3 transmits the inspection results of the work machine 2 to at least the server device 5 via the communication network N. **In** addition, the display 31 displays the operation information transmitted from the work machine 2 or the lifetime prediction result and the like transmitted from the server device 5.

The server device 5 predicts a lifetime of the work machine 2 as the observation target. The server device 5 includes a communication device 51, the operation information database 52, the history information database 53, an arithmetic processing device 54, and a prediction result database 55.

The communication device 51 communicates with the work machine 2 or the terminal device 3 via the communication network N.

The operation information database 52 is a database that stores the operation information of each of the plurality of work machines 2. As illustrated in Fig. 2, the operation information database 52 stores information of "unit number" that identifies each work machine 2, information on an "operation time" at a time when the information was acquired for each work machine 2, and information on an "operation date and time" that indicates a date and time when the operation information was acquired for each work machine 2, in a mutually corresponding manner. The operation information is transmitted from the work machines 2 to the server device 5 regularly (for example, once a day).

The history information database 53 is a database that stores the history information of each of the plurality of work machines 2. The history information indicates a history of event data, which is a record of an event that has occurred in each of the plurality of work machines 2. An event indicates a change from a normal state of the product as the observation target. When the product as the observation target is the work machine 2, an event occurs when a status in which the work machine 2 normally operates to a status in which an event such as a malfunction or a repair of a part has occurred. **In** other words, the event in the embodiment includes a fact that the work machine 2 has been repaired. The event data in the embodiment includes a repair record for the work machine 2.

As illustrated in Fig. 3, the history information database 53 stores the information of "unit number" that identifies each work machine 2, the information on the "repair date" which is one of the repair record for each work machine 2, and information on the "repair part" which is one of the repair record for each work machine 2, in a mutually corresponding manner. In addition to the repair record for the work machine 2, the inspection result for the work machine 2 is also stored in the history information database 53, corresponding to the information of the "unit number."

The arithmetic processing device 54 predicts the lifetime of the work machine 2 based on the operation information stored in the operation information database 52 and the history information stored in the history information database 53. Specifically, the arithmetic processing device 54 calculates the event data acquisition rate, which indicates a rate of products that have event data in which the occurrences of events are accurately recorded to the plurality of work machines 2, and predicts the corrected lifetime based on the calculated event data acquisition rate.

The arithmetic processing device 54 is configured to include a processor such as a CPU, a memory such as ROM and RAM, and the processor executes programs stored in the ROM to achieve various functions of the arithmetic processing device 54.

The arithmetic processing device 54 includes an information acquisition section 541, an extraction section 542, a first calculation section 543, a second calculation section 544, a lifetime prediction section 545, an inspection time determination section 546, an information output section 547, as illustrated in Fig. 1.

The information acquisition section 541 acquires the operation information and the history information of the work machine 2 as the observation target from the operation information database 52 and the history information database 53, respectively. The work machine 2 as the observation target is designated by a user, such as the maintenance personnel, by inputting it into the terminal device 3. In this case, a single work machine 2 may be designated, or a plurality of work machines 2 that have common attributes, such as a model type or a vehicle class (weight), may be designated in a group unit. Designating them in group units improves a reliability of the lifetime prediction, and thus, it is preferable. When there are a plurality of work machines 2 in a vicinity of the maintenance personnel, a list of the work machines 2 that are candidates for the observation target is automatically displayed on the terminal device 3 based on location information and the like of the work machines 2 and the terminal device 3, and it is also possible to designate an arbitrary work machine 2 from among them.

The extraction section 542 extracts a long-term operating product that has been operating for longer than a design life thereof from the plurality of work machines 2, based on the operation information of the work machines 2. The operation information includes the operation times of the work machines 2. The work machines 2 as the observation target include a work machine 2 that corresponds to the long-term operating product and a work machine 2 that does not correspond to the long-term operating products. The extraction section 542 calculates a total operation time, which is the total (accumulated) of the operation times from shipping to the present, based on the operation time included in the operation information. The extraction section 542 extracts the work machine 2 in which the calculated total operation time has reached, for example, a time of 1.5 times or more of the design life, as the long-term operating product. Even for the work machines 2 that fall under a category of the long-term operating product, there are two types: the work machine 2 having the history information for which the repair record is present, and the work machine 2 having the history information for which the repair record is not present. The above-described "1.5 times" is one example based on a standard design life, and a criterion for determining the long-term operating product may be changed as desired.

The first calculation section 543 calculates the event data acquisition rate, which indicates a rate of the work machines 2 that have the event data accurately recording the occurrences of events to the plurality of work machines 2 as the observation target, based on the history information. For example, when the number of the work machines 2 as the observation targets is 10,000 and the number of the work machines 2 for which the occurrences of events were accurately observed is 500, the event data acquisition rate is calculated as (500/10,000) = 5%.

The work machines 2 as the observation targets include the work machine 2 for which the repair record is present as the event data and the work machine 2 for which the repair record is not present. The work machine 2 for which the repair record is present as the event data is the work machine 2 for which the repair history is present in the history information, and is also referred to below as "the work machine 2 for which the repair record is accurately recorded." The work machines 2 for which the repair records are not present include, for example, the work machine 2 having actually been repaired but for which the repair record is not present, and the work machine 2 having been repaired using an imitation, and these types of work machines 2 are also referred to below as "the work machine 2 for which the repair record is not accurately recorded." Even when the lifetime prediction is executed using the Kaplan-Meier method, including the work machine 2 for which the repair record is not accurately recorded, it is difficult to achieve a highly reliable lifetime prediction. Therefore, in order to perform the lifetime prediction by excluding the work machine 2 for which the repair record is not accurately recorded, the first calculation section 543 calculates the event data acquisition rate, which indicates the rate of the work machine 2 for which the repair record is accurately recorded to the work machines 2 as the observation target.

Here, the long-term operating products with the total operation time of 1.5 times or more than the design life should, in principle, have the repair record in all the long-term operating products. However, in fact, the long-term operating products include both the long-term operating product for which the repair record is not present due to influence of the repair using the imitation and the like and the long-term operating product for which the repair record is present. The rate of the long-term operating products for which the repair records are present to the long-term operating products is extremely likely to be equal to the rate of the work machine 2 for which the repair record is accurately recorded to the work machines 2 as the observation target. Therefore, the first calculation section 543 of the embodiment calculates the rate of the long-term operating products for which the repair record is present to the long-term operating products extracted by the extraction section 542, as the event data acquisition rate. Accordingly, the first calculation section 543 of the embodiment can accurately calculate the event data acquisition rate.

Specifically, the first calculation section 543 of the embodiment calculates an event data acquisition rate $F_r$ using Formula 1. In Formula 1, $F_r$ indicates the event data acquisition rate, A indicates the number of the long-term operating products for which the repair records are present, and B indicates the number of the long-term operating products for which the repair records are not present. A denominator (A+B) on the right-hand side of Formula 1 indicates the total number of the long-term operating products extracted by the extraction section 542.

[Formula 1]

$$F_r = \frac{A}{A+B}$$

The first calculation section 543 of the embodiment calculates the event data acquisition rate by counting (designating as a calculation target) the first repair records when the history information for each of the long-term operating products includes the plurality of repair records. The first repair record for the work machine 2 indicates that the first repair was performed on any part in the work machine 2 after shipping of the work machine 2. Depending on the work machine 2, a plurality of repairs may be performed. For example, when a certain part of the work machine 2 malfunctions and is repaired (the first time repair date), then the certain part malfunctions again after the repair, and is repaired again, the repair record for the work machine 2 includes the plurality of repair records. The first calculation section 543 of the embodiment identifies the first repair record that has the oldest repair date among the plurality of repair records for each of the long-term operating products, and calculates the number of the long-term operating products for which the repair records are present by counting the identified first repair records. This allows the first calculation section 543 to accurately calculate the event data acquisition rate without double-counting the repair records.

The second calculation section 544 calculates the operation time between failures, which is the operation time of the work machine 2 from the time of shipping of the work machine 2 until the first repair record, based on the operation information and the history information. Specifically, the second calculation section 544 identifies the first repair record of each of the plurality of work machines 2 as the observation targets, and identifies the first repair date using the identified first repair record. The second calculation section 544 then calculates the operation time from the shipping date to the first repair date for each of the plurality of work machines 2 as the observation targets, as the operation time between failures.

The lifetime prediction section 545 performs the lifetime prediction for the work machine 2 using the Kaplan-Meier method. In this case, the lifetime prediction section 545 predicts the corrected lifetime based on the event data acquisition rate calculated by the first calculation section 543, and calculates a lifetime prediction result after correction. The term "lifetime prediction result after correction" refers to a corrected lifetime prediction result from the lifetime prediction result calculated by applying the Kaplan-Meier method as is (hereinafter also referred to as "lifetime prediction result before correction"). Specifically, the lifetime prediction section 545 corrects the number of surviving work machines 2 as the observation targets according to the event data acquisition rate calculated by the first calculation section 543. The lifetime prediction section 545 then uses the Kaplan-Meier method to estimate the survival rate of the plurality of work machines 2 from the corrected number of surviving work machines 2 and the operation time between failures calculated by the second calculation section 544. The lifetime prediction section 545 can then calculate the lifetime prediction result after correction. The number of survivors of the work machines 2 refers to the number of the work machines 2 that have not malfunctioned among the plurality of work machines 2 as the observation targets. The survival rate of the work machines 2 refers to the rate of the number of the work machines 2 having not malfunctioned to the total number of the plurality of work machines 2 as the observation targets.

The lifetime prediction result before correction, which is calculated by applying the Kaplan-Meier method as it is, is expressed by Formula 2. In Formula 2, $S^{\wedge}_{KM}(t)$ on the left side shows an estimated value of the survival rate of the work machines 2 at a total operation time t. In Formula 2, $n_i$ on the right side indicates the number of the work machines 2 having survived (the number of survivors) up to a time before the total operation time t. The number of the work machines 2 having malfunctioned during the total operation time t is indicated by $d_i$ on the right-hand side.

$$[\text{Formula 2}]$$

$$\hat{S}_{KM}(t) = \prod_{i:t_i \leq t} \left( \frac{n_i - d_i}{n_i} \right)$$

In contrast, the lifetime prediction section 545 of the embodiment estimates the survival rate of the work machines 2 by correcting the number $n_i$ of the surviving work machines 2 using the event data acquisition rate $F_r$, as indicated in Formula 3. In Formula 3, $S^{\wedge}_{AKM}(t)$ on the left side indicates the estimated value of the survival rate of the work machines 2 after correction.

$$[\text{Formula 3}]$$

$$\hat{S}_{AKM}(t) = \prod_{i:t_i \leq t} \left( \frac{\max(0, n_i F_r - d_i)}{n_i F_r} \right)$$

The lifetime prediction section 545 can calculate the lifetime prediction result as shown in Fig. 4. The vertical axis of Fig. 4 indicates the estimated value of the survival rate of the work machines 2, and the horizontal axis of Fig. 4 indicates the total operation time of the work machines 2. In Fig. 4, the lifetime prediction result after correction is indicated by the solid line, and the lifetime prediction result before correction is indicated by the broken line. As shown in Fig. 4, the lifetime prediction result before correction might not be zero even after the total operation hours have elapsed due to the influence of the number of the work machines 2 having been repaired using an imitation and the number of the work machines 2 having actually been repaired but for which the repair records are not present included in the number of survivors ($n_i$). In contrast, in the lifetime prediction result after correction, the estimated value of the survival rate reaches zero after an elapse of a long period of the total operation time, due to the influence of the correction of the number ($n_i$) of surviving work machines 2 by the event data acquisition rate ($F_r$). When the lifetime prediction result after correction is compared with the lifetime prediction result before correction, it can be found that the lifetime prediction result after correction using Formula 3 by the lifetime prediction section 545 is appropriate.

The inspection time determination section 546 determines the time when the work machine 2 should be inspected based on the lifetime prediction result after correction calculated by the lifetime prediction section 545. For example, the inspection time determination section 546 can regard ae time T1 when the estimated value of the survival rate of the work machine 2, which is the lifetime prediction result after correction, reaches a first threshold S1 (for example, 75%), as the time when a remaining life of the work machine 2 reaches the first threshold S1. The inspection time determination section 546 determines that the time T1 when the estimated value of the survival rate of the work machine 2 reaches the first threshold S1 is the time when an inspection of the work machine 2 is recommended. The inspection time determination section 546 determines that a time T2 when the estimated value of the survival rate of the work machine 2, which is the lifetime prediction result after correction, reaches a second threshold S2 (for example, 50%) is the time when the inspection of the work machine 2 is strongly recommended. In addition, the inspection time determination section 546 determines a time T3 when the estimated value of the survival rate of the work machines 2, which is the lifetime prediction result after correction, reaches a third threshold S3 (for example, 25%), as the time when the inspection of the work machine 2 should be urgently performed. Accordingly, the inspection time determination section 546 determines the time when the inspection of the work machine 2 should be performed based on the lifetime prediction result after correction calculated by the lifetime prediction section 545.

In the embodiment, the service life of the work machine 2 at the time of shipment is set at 100%, and a guideline of the current service life of the work machine 2 is expressed as a percentage in accordance with the total operation time after shipping, and this percentage indicator is also referred to as a "lifetime progression." In the embodiment, the estimated value of the survival rate of the work machine 2 estimated by the lifetime prediction section 545 is regarded as the lifetime progression of the work machine 2.

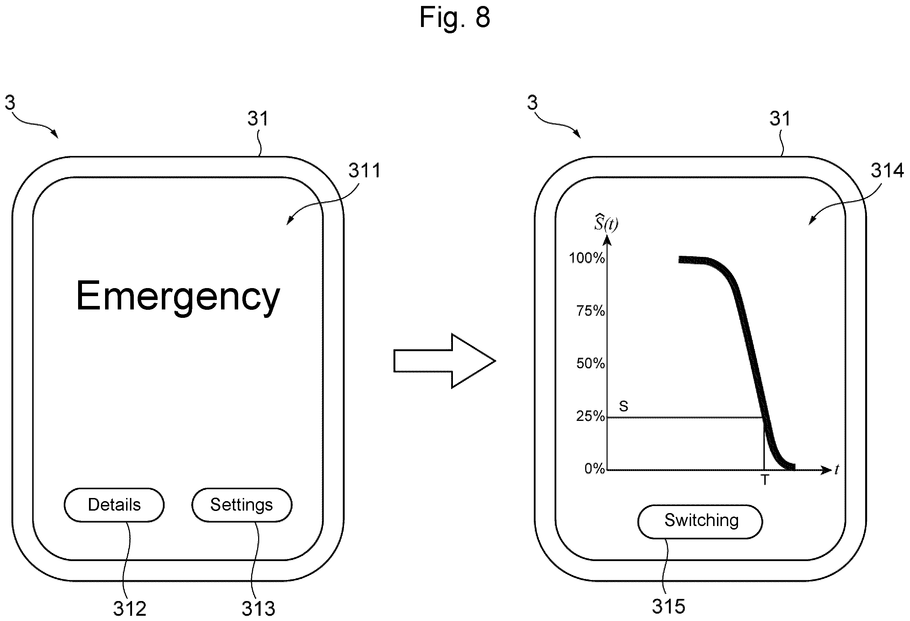

The information output section 547 registers the lifetime prediction result calculated by the lifetime prediction section 545 and the determination result of the inspection time acquired by the inspection time determination section 546 in the prediction result database 55, and also outputs them to the communication device 51. The communication device 51 transmits the lifetime prediction result and the determination result of the inspection time to at least the terminal device 3 via the communication network N. The terminal device 3 displays the lifetime prediction result and the determination result of the inspection time on the display 31 in a graph format, as illustrated in Fig. 4, for example. Other display examples, such as the lifetime prediction results, are described later using Figs. 8 to 10.

The prediction result database 55 stores the lifetime prediction result calculated by the lifetime prediction section 545 and the determination result of the inspection time acquired by the inspection time determination section 546. The lifetime prediction results and the like stored in the prediction result database 55 are provided to the arithmetic processing device 54 and are used to improve the reliability of the lifetime prediction in the arithmetic processing device 54.

In addition, the lifetime prediction section 545 may calculate not only the lifetime prediction result after correction as indicated by Formula 3, but also the lifetime prediction result before correction as indicated by Formula 2. In this case, the information output section 547 outputs the lifetime prediction result after correction and the lifetime prediction result before correction to the communication device 51. The communication device 51 transmits the lifetime prediction result after correction and the lifetime prediction result before correction to the terminal device 3. The terminal device 3 displays the lifetime prediction result after correction and the lifetime prediction result before correction on the display 31.

In addition, the lifetime prediction section 545 may also use a method other than the Kaplan-Meier method, such as the Nelson-Aalen method, for the lifetime prediction of the work machine 2.

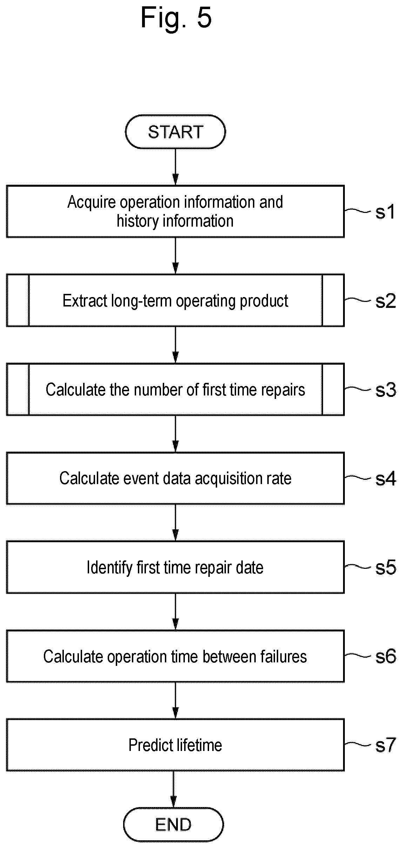

Fig. 5 is a flowchart of a processing related to the lifetime prediction executed by the arithmetic processing device 54 illustrated in Fig. 1.

In Step s1, the information acquisition section 541 of the arithmetic processing device 54 acquires the operation information and the history information for the plurality of work machines 2 as the observation targets from the operation information database 52 and the history information database 53, respectively.

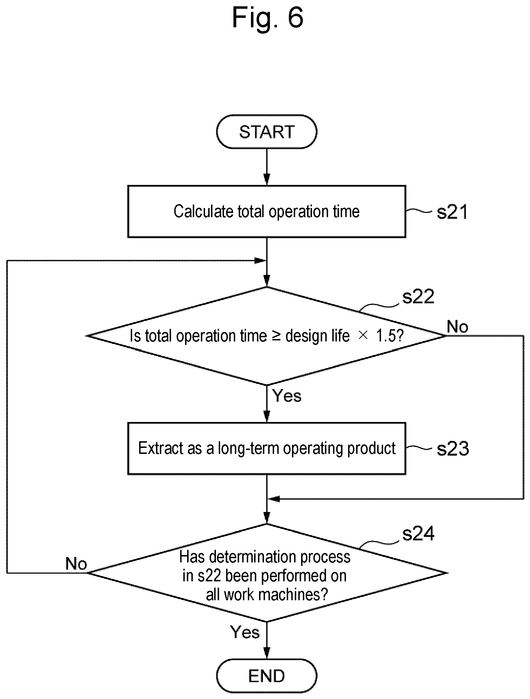

In Step s2, the extraction section 542 of the arithmetic processing device 54 extracts the long-term operating products from among the plurality of work machines 2. The details of Step s2 are described later using Fig. 6.

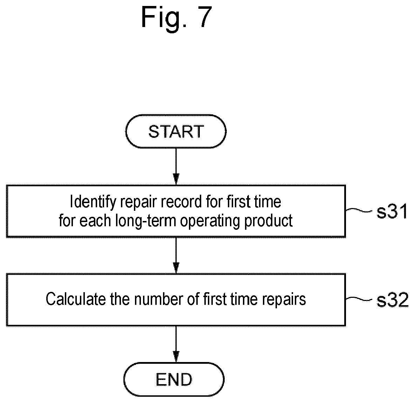

In Step s3, the first calculation section 543 of the arithmetic processing device 54 calculates the number of first time repairs, which is the number of times the first repair record for each long-term operating product that has been extracted has been counted. The number of first time repairs corresponds to the number A of the long-term operating products for which the repair records are present in Formula 1. The detail of Step s3 is described later using Fig. 7.

In Step s4, the first calculation section 543 of the arithmetic processing device 54 calculates the event data acquisition rate.

In Step s5, the second calculation section 544 of the arithmetic processing device 54 identifies the first time repair date for each of the plurality of work machines 2 as the observation targets.

In Step s6, the second calculation section 544 of the arithmetic processing device 54 calculates the operation time between failures for each of the plurality of work machines 2.

In Step s7, the lifetime prediction section 545 of the arithmetic processing device 54 performs the lifetime prediction for the work machine 2. Subsequently, the arithmetic processing device 54 ends the processing illustrated in Fig. 5.

After Step s1, the arithmetic processing device 54 may execute the processing from Step s2 to Step s4 and the processing from Step s5 to Step s6 in parallel, and then execute Step s7. Alternatively, the arithmetic processing device 54 may execute the processing from Step s5 to Step s6 first after Step s1, and then execute the processing from Step s2 to Step s4, and then execute Step s7.

Fig. 6 is a flowchart of a detail of Step s2 illustrated in Fig. 5.

In Step s21, the extraction section 542 of the arithmetic processing device 54 calculates the total operation time of each of the plurality of work machines 2 as the observation targets.

In Step s22, the extraction section 542 of the arithmetic processing device 54 determines whether or not the total operation time of the work machine 2 is 1.5 times or more than the design life. When the total operation time is 1.5 times or more than the design life of the work machine 2, the extraction section 542 proceeds to Step s23. When the total operation time is not 1.5 times or more than the design life of the work machine 2, the extraction section 542 proceeds to Step s24.

In Step s23, the extraction section 542 of the arithmetic processing device 54 extracts the work machine 2 as a target of the determination process in Step s22 as the long-term operating product.

In Step s24, the extraction section 542 of the arithmetic processing device 54 determines whether or not the determination process of Step s22 has been performed for all of the work machines 2 as the observation targets. When the determination process of Step s22 has been performed for all the work machines 2, the extraction section 542 ends this process illustrated in Fig. 6, and proceeds to Step s3 of Fig. 5. When the determination process in Step s22 has not been performed for all the work machines 2, the extraction section 542 proceeds to Step s22 in Fig. 5.

Fig. 7 is a flowchart of a detail of Step s3 illustrated in Fig. 5.

In Step s31, the first calculation section 543 of the arithmetic processing device 54 identifies the first time repair record for each of the extracted long-term operating products.

In Step s32, the first calculation section 543 of the arithmetic processing device 54 counts the identified first time repair records to calculate the number of first time repairs. Subsequently, the first calculation section 543 ends this process illustrated in Fig. 7 and proceeds to Step s4 in Fig. 5.

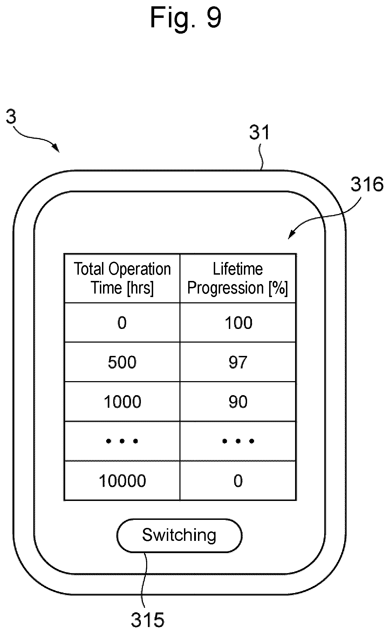

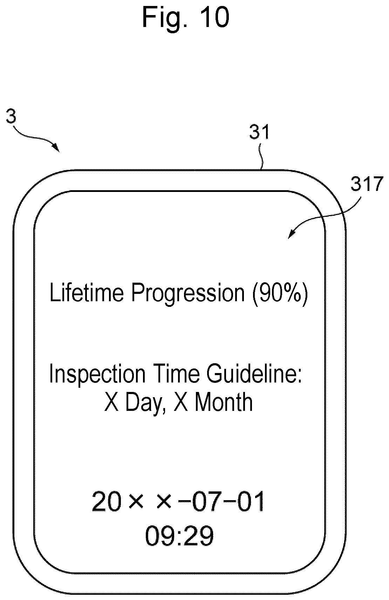

Fig. 8 is a diagram illustrating another display example of the lifetime prediction result and the like. Fig. 9 is a diagram illustrating another display example of the lifetime prediction result and the like. Fig. 10 is a diagram illustrating another display example of the lifetime prediction result and the like.

The terminal device 3 can display the lifetime prediction result and the determination result of the inspection time on the display 31 in the display format illustrated in Fig. 8. For example, the terminal device 3 can display an alert 311 indicating the urgency of the inspection time according to the remaining life of the current work machine 2, a tab 312 for displaying detailed lifetime prediction results and the like, and a tab 313 for setting the display format of the display 31, as illustrated on the left side of Fig. 8. When the tab 312 is tapped by a user, the terminal device 3 displays the detailed lifetime prediction results and the like in a display format such as a graph 314, as illustrated on the right side of Fig. 8. Furthermore, the terminal device 3 can display a tab 315 for switching between the displays of the lifetime prediction result before correction and the lifetime prediction result after correction, as illustrated on the right side of Fig. 8. When the tab 315 is tapped by the user, the terminal device 3 can switch between the displays of the lifetime prediction result before correction and the lifetime prediction result after correction. The terminal device 3 can also display the lifetime prediction result before correction and the lifetime prediction result after correction on the same screen at the same time for comparison.

As described above, the lifetime progression of the work machine 2 is an indicator that expresses the guideline of the current service life of the work machine 2 as a percentage in accordance with the total operation time after shipping, using the service life at the time of shipment of the work machine 2 as 100%. When the lifetime progression is 50%, it is estimated that about half of the work machines 2 will malfunction based on the past repair record and the like. As the lifetime progression decreases, the urgency of inspection increases. Thus, the server device 5 (the inspection time determination section 546 of the arithmetic processing device 54) can set a plurality of thresholds for the remaining life depending on the urgency of inspection, and display a different alert 311 on the terminal device 3 each time the remaining life reaches a threshold. For example, when the lifetime progression reaches 75%, the terminal device 3 can display an alert 311 saying "inspection recommendation" because there is still relatively plenty of time left in the service life. For example, when the lifetime progression reaches 50%, the terminal device 3 can display an alert 311 saying "important" strongly recommending the inspection. For example, when the lifetime progression reaches 25%, the terminal device 3 can display an alert 311 saying "urgent" to indicate that the inspection is urgently required.

In addition, in order to make it easier for the user to understand what stage the current lifetime progression is at, the terminal device 3 can display the current lifetime progression as a horizontal line S in the graph 314 as illustrated on the right side of Fig. 8, or display the inspection time corresponding to the current lifetime progression as a vertical bar T in the graph 314. In this case, the terminal device 3 can display the horizontal line S and the vertical bar T in different colors according to the urgency of the inspection. For example, the terminal device 3 can display the horizontal line S and the vertical bar T in green before the lifetime progression reaches "inspection recommendation." For example, the terminal device 3 can display the horizontal line S and the vertical bar T in blue after the lifetime progression reaches "inspection recommendation" and before it reaches "important." For example, the terminal device 3 can display the horizontal line S and the vertical bar T in yellow before the lifetime progression reaches "urgent" after reaching "important." For example, the terminal device 3 can display the horizontal line S and the vertical bar T in red after the lifetime progression reaches "urgent. "

Furthermore, the terminal device 3 can display, by means of a pop-up window that appears in the vicinity of the horizontal line S or the vertical bar T, the service life of the work machine 2 corresponding to the current lifetime progression, the date on which the service life will end, or the date of the inspection time of the work machine 2 corresponding to the current lifetime progression and the like. For example, the terminal device 3 can display a message such as "Within 6 months (on X day, X month)" in the pop-up window as the service life (the date when the service life expires) of the work machine 2 corresponding to the current lifetime progression. The text display is just one example, and could be a calendar display, for example, and the display format is not limited to the messages or the pop-ups. For example, during the period when there is still some time left in the service life, it could be a simple display such as "3 months left", and when the date when the service life will end is approaching, it could be a display that shows a specific date as the guideline.

In addition, the terminal device 3 can also display the lifetime prediction result and the determination result of the inspection time on the display 31 in the display format of a table 316 illustrated in Fig. 9, instead of the graph 314 illustrated on the right side of Fig. 8.

In addition, the terminal device 3 can display the lifetime prediction result and the determination result of the inspection time on the display 31 in a display format other than the display formats illustrated in Figs. 8 and 9. For example, the terminal device 3 can display the lifetime prediction result and the determination result of the inspection time in the form of a message 317, as illustrated in Fig. 10. The message 317 may be transmitted to the terminal device 3 by email or SMS from the server device 5, and may be displayed as the pop-up on the terminal device 3. The message 317 includes the guideline of the lifetime progression of the work machine 2 and the guideline for the inspection time. The transmission frequency and the display frequency of the message 317 may be a frequency at which it is transmitted and displayed each time the lifetime progression reaches a threshold, or it may be a frequency at which it is transmitted and displayed at regular intervals, such as once a week. The transmission frequency and the display frequency of the message 317 may be changed optionally according to the user's settings in order to improve the user's convenience.

In addition, the terminal device 3 can display the lifetime prediction result and the determination result of the inspection time by arbitrarily combining the respective display examples in Figs. 8 to 10. The terminal device 3 can display the lifetime prediction result and the determination result of the inspection time by changing the combination of the respective display examples in Figs. 8 to 10 in any way desired according to the user's settings. In Figs. 8 to 10, an example in which the lifetime prediction result and the determination result of the inspection time are displayed on the display 31 of terminal device 3 is described, but the lifetime prediction result and the determination result of the inspection time may be displayed not only on the terminal device 3, but also on the display 24 of the work machine 2.

As described above, the lifetime prediction system 1 of the embodiment is the lifetime prediction system including the server device 5 that predicts the lifetime of the product as a machine such as the work machine 2 or a machine part. The server device 5 includes the operation information database 52 that stores the operation information for each of the plurality of products as the observation targets, and the history information database 53 that stores the history information indicating the history of the event data, which is the record of the event that has occurred in each of the plurality of products. The server device 5 includes the arithmetic processing device 54 that predicts the lifetime of the product. The arithmetic processing device 54 calculates the event data acquisition rate that indicates the rate of the products that have the event data accurately recorded for the occurrence of events to the plurality of products, based on the operation information stored in the operation information database 52 and the history information stored in the history information database 53. The arithmetic processing device 54 predicts the corrected lifetime of the product based on the calculated event data acquisition rate.

As a result, the lifetime prediction system 1 of the embodiment can perform the lifetime prediction even when the events that have occurred in the product are not accurately recorded. Therefore, the lifetime prediction system 1 of the embodiment can perform the lifetime prediction with a high level of the reliability even when the records of the events that have occurred are inaccurate.

Furthermore, in the embodiment of the lifetime prediction system 1, the arithmetic processing device 54 uses the Kaplan-Meier method to predict the lifetime of the product.

As a result, the lifetime prediction system 1 of the embodiment can use the existing lifetime prediction method, which is the Kaplan-Meier method. Therefore, the lifetime prediction system 1 of the embodiment can easily perform the highly reliable lifetime prediction even when the records of the events that have occurred are inaccurate.

Furthermore, in the lifetime prediction system 1 of the embodiment, the event data includes the repair records for the products. The arithmetic processing device 54 includes the extraction section 542 that extracts the long-term operating products that have been operating for longer than their design lives from among the plurality of products, based on the operation information stored in the operation information database 52. The arithmetic processing device 54 includes the first calculation section 543 that calculates the rate of the long-term operating products for which the repair records are present to the long-term operating products extracted by the extraction section 542 as the event data acquisition rate, based on the history information stored in the history information database 53. The arithmetic processing device 54 includes the lifetime prediction section 545 that predicts the corrected lifetime of the product based on the event data acquisition rate calculated by the first calculation section 543.

As a result, the lifetime prediction system 1 of the embodiment can accurately calculate the event data acquisition rate, which indicates the rate of the products for which the occurrences of events are accurately recorded. In addition, the lifetime prediction system 1 of the embodiment can perform the lifetime prediction based on the accurate event data acquisition rate, thus allowing the improved accuracy of the lifetime prediction. Therefore, the lifetime prediction system 1 of the embodiment can perform even more reliable lifetime prediction even when the records of the events that have occurred are inaccurate.

In addition, in the lifetime prediction system 1 of the embodiment, the arithmetic processing device 54 further includes the second calculation section 544 that calculates the operation time between failures, which is the operation time of the product from shipping of the product to the first time repair record, based on the operation information and the above-described history information. The lifetime prediction section 545 corrects the number of surviving plurality of products according to the event data acquisition rate calculated by the first calculation section 543. The lifetime prediction section 545 calculates the lifetime prediction result after correction by estimating the survival rate of the plurality of products using the Kaplan-Meier method based on the corrected number of survivors and the calculated operation time between failures.

As a result, the lifetime prediction system 1 of the embodiment can perform the lifetime prediction by expanding a scope of application of the Kaplan-Meier method as the valid lifetime prediction method even when the records of the events that have occurred in the product are inaccurate. Therefore, the lifetime prediction system 1 of the embodiment can perform the highly reliable lifetime prediction easily and reliably even when the records of the events that have occurred are inaccurate.

Furthermore, in the lifetime prediction system 1 of the embodiment, the first calculation section 543 calculates the event data acquisition rate by counting the first time repair records when the history information of each of the long-term operating products includes the plurality of repair records.

As a result, the lifetime prediction system 1 of the embodiment does not have to count the repair records twice, thus allowing the accurate calculation of the event data acquisition rate. Therefore, the lifetime prediction system 1 of the embodiment can perform even more reliable lifetime prediction even when the records of the events that have occurred are inaccurate.

Furthermore, in the lifetime prediction system 1 of the embodiment, the arithmetic processing device 54 includes the inspection time determination section 546 that determines the time when the product should be inspected based on the lifetime prediction result after correction.

As a result, even when the records of the events that have occurred are inaccurate, the lifetime prediction system 1 of the embodiment is able to accurately determine the time when the product should be inspected, while also making highly reliable lifetime prediction.

Furthermore, the lifetime prediction system 1 of the embodiment further includes the terminal device 3 connected to the server device 5 via the communication network N. The server device 5 further includes the communication device 51 that communicates with the terminal device 3. The arithmetic processing device 54 calculates the lifetime prediction result after correction and also calculates the lifetime prediction result before correction, which indicates the lifetime before correction. The communication device 51 transmits the lifetime prediction result after correction and the lifetime prediction result before correction to the terminal device 3. The terminal device 3 displays the lifetime prediction result after correction and the lifetime prediction result before correction.

As a result, the lifetime prediction system 1 of the embodiment can present the user with the lifetime prediction results before and after correction, thus allowing the improved convenience of the users who desire to compare the lifetime prediction results before and after correction. Therefore, the lifetime prediction system 1 of the embodiment can improve the convenience of the users while performing the highly reliable lifetime prediction even when the records of the events that have occurred are inaccurate.

While the embodiments of the present invention are described above in detail, the present invention is not limited to the above-described embodiments, and various changes can be made without departing from the spirit of the present invention described in the claims. In the present invention, a configuration of one embodiment can be added to a configuration of another embodiment, a configuration of one embodiment can be replaced with a configuration of another embodiment, and a part of configurations of one embodiment can be deleted.

Reference Signs List

1      Lifetime prediction system
2      Work machine
3      Terminal device
5      Server device
51     Communication device
52     Operation information database
53     History information database
54     Arithmetic processing device
541    Information acquisition section
542    Extraction section
543    First calculation section
544    Second calculation section
545    Lifetime prediction section
546    Inspection time determination section

**Claims**

1. A lifetime prediction system comprising

    a server device that predicts a lifetime of a product as a machine or a machine part,
    wherein the server device includes:

       an operation information database that stores operation information for each of a plurality of products;
       a history information database that stores history information indicating a history of event data as a record of an event having occurred in each of the plurality of products; and
       an arithmetic processing device that predicts the lifetime,

    wherein the arithmetic processing device calculates an event data acquisition rate indicating a rate of product having the event data in which occurrence of the event is accurately recorded to the plurality of products, based on the stored operation information and history information, and predicts a corrected lifetime based on the calculated event data acquisition rate.

2. The lifetime prediction system according to claim 1,
    wherein the arithmetic processing device predicts the lifetime using Kaplan-Meier method.

3. The lifetime prediction system according to claim 1,

    wherein the event data includes a repair record for the product, and
    wherein the arithmetic processing device includes:

       an extraction section that extracts a long-term operating product having been operating for longer than a design life thereof among the plurality of products, based on the stored operation information;
       a first calculation section that calculates a rate of the long-term operating product for which the repair record is present to the extracted long-term operating products as the event data acquisition rate, based on the stored history information; and
       a lifetime prediction section that predicts the corrected lifetime based on the calculated event data acquisition rate.

4. The lifetime prediction system according to claim 3,

    wherein the arithmetic processing device further includes a second calculation section that calculates an operation time between failures as an operation time of the product from shipping of the product to a first time repair record, based on the stored operation information and history information,
    wherein the lifetime prediction section:

       corrects a number of survivors of the plurality of products according to the calculated event data acquisition rate; and
       calculates the lifetime prediction result after correction by estimating a survival rate of the plurality of products using Kaplan-Meier method, based on the corrected number of survivors and the calculated operation time between failures.

5. The lifetime prediction system according to claim 3,
    wherein the first calculation section calculates the event data acquisition rate by counting the first time repair record when the history information for each of the long-term operating products includes the plurality of repair records.

6. The lifetime prediction system according to claim 1,
    wherein the arithmetic processing device includes an inspection time determination section that determines a time when the product is to be inspected based on the lifetime prediction result after correction.

7. The lifetime prediction system according to claim 1, further comprising

    a terminal device connected to the server device via a communication network,
    wherein the server device further includes a communication device that communicates with the terminal device,

wherein the arithmetic processing device calculates a lifetime prediction result after correction and also calculates a lifetime prediction result before correction,

wherein the communication device transmits the lifetime prediction result after correction and the lifetime prediction result before correction to the terminal device, and

wherein the terminal device displays the lifetime prediction result after correction and the lifetime prediction result before correction.

Fig. 1

Server Device (5)
- Communication Device (51)
- Operation Information DB (52)
- History Information DB (53)
- Prediction Result DB (55)
- Arithmetic Processing Device (54)
  - Information Acquisition Section (541)
  - Extraction Section (542)
  - First Calculation Section (543)
  - Second Calculation Section (544)
  - Lifetime Prediction Section (545)
  - Inspection Time Determination Section (546)
  - Information Output Section (547)

N — Network

Radio Base Station (4)

Terminal Device (3)
- Display (31)

Work Machine (2)
- Operation Information Sensor (21)
- Communication Device (23)
- Display (24)
- Control Device (22)
  - Operation Information Acquisition Section (221)
  - Operation Information Output Section (222)

1

# Fig. 2

52

| Product | Operating Date and Time | Operating Time [hrs] |
|---------|------------------------|----------------------|
| Unit Number A | 2010/1/1 | 0 |
| · · · | · · · | · · · |
| Unit Number A | 2021/3/31 | 15,000 |
| Unit Number B | 2012/4/1 | 0 |
| · · · | · · · | · · · |

# Fig. 3

53

| Product | Repair Date | Repair Part |
|---|---|---|
| Unit Number A | 2018/1/1 | Part a |
| • • • | • • • | • • • |
| Unit Number A | 2017/2/1 | Part k |
| Unit Number B | 2019/4/1 | Part b |
| • • • | • • • | • • • |

# Fig. 4

# Fig. 5

START

↓

Acquire operation information and history information — s1

↓

Extract long-term operating product — s2

↓

Calculate the number of first time repairs — s3

↓

Calculate event data acquisition rate — s4

↓

Identify first time repair date — s5

↓

Calculate operation time between failures — s6

↓

Predict lifetime — s7

↓

END

# Fig. 6

START

Calculate total operation time ~ s21

s22

Is total operation time ≥ design life × 1.5? — No

Yes

Extract as a long-term operating product ~ s23

s24

No — Has determination process in s22 been performed on all work machines?

Yes

END

# Fig. 7

```
        ┌─────────────┐
        │    START    │
        └─────────────┘
               │
               ▼
┌──────────────────────────────────────┐
│      Identify repair record for first time      │ ～ s31
│   for each long-term operating product        │
└──────────────────────────────────────┘
               │
               ▼
┌──────────────────────────────────────┐
│   Calculate the number of first time repairs   │ ～ s32
└──────────────────────────────────────┘
               │
               ▼
        ┌─────────────┐
        │     END     │
        └─────────────┘
```

Fig. 8

# Fig. 9

3

31

316

| Total Operation Time [hrs] | Lifetime Progression [%] |
|---|---|
| 0 | 100 |
| 500 | 97 |
| 1000 | 90 |
| . . . | . . . |
| 10000 | 0 |

Switching

315

Fig. 10

3

31

317

Lifetime Progression (90%)

Inspection Time Guideline:
X Day, X Month

20××-07-01
09:29

## INTERNATIONAL SEARCH REPORT

| International application No. |
| --- |
| **PCT/JP2023/041160** |

| A. | CLASSIFICATION OF SUBJECT MATTER |
| --- | --- |

*G06Q 10/04*(2023.01)i; *G06Q 10/20*(2023.01)i
FI:   G06Q10/04; G06Q10/20

According to International Patent Classification (IPC) or to both national classification and IPC

| B. | FIELDS SEARCHED |
| --- | --- |

Minimum documentation searched (classification system followed by classification symbols)

G06Q10/04; G06Q10/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-82107 A (HITACHI, LTD.) 27 May 2021 (2021-05-27)<br>entire text, all drawings | 1-7 |
| A | JP 2009-48316 A (NEC FIELDING, LTD.) 05 March 2009 (2009-03-05)<br>entire text, all drawings | 1-7 |
| A | JP 6908201 B1 (MITSUBISHI ELECTRIC CORP.) 21 July 2021 (2021-07-21)<br>entire text, all drawings | 1-7 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 December 2023** | **19 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/041160**

| Patent document cited in search report | | | Publication date (day/month/year) | Patent family member(s) | | | Publication date (day/month/year) |
|---|---|---|---|---|---|---|---|
| JP | 2021-82107 | A | 27 May 2021 | US | 2022/0300470 | A1 | |
| | | | | entire text, all drawings | | | |
| | | | | WO | 2021/100800 | A1 | |
| | | | | EP | 4064141 | A1 | |
| JP | 2009-48316 | A | 05 March 2009 | (Family: none) | | | |
| JP | 6908201 | B1 | 21 July 2021 | WO | 2021/166072 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6944586 B